# EUROPÄISCHE PATENTSCHRIFT

(11) **EP 2 386 236 B1**
(45) Veröffentlichungstag und Bekanntmachung des Hinweises auf die Patenterteilung: **05.05.2021**
(21) Anmeldenummer: 11400020.1
(22) Anmeldetag: 08.03.2011
(51) Int. Cl.: A47L 1/02, F24S 40/20, F24S 50/00

(54) **Vorrichtung zum Reinigen von zumindest annährend ebenen Flächen**
Apparatus for cleaning at least approximately planar surfaces
Appareils pour nettoyer surfaces au moins approximativement planes

(30) Priorität: 16.03.2010 DE 202010004116 U
(43) Veröffentlichungstag der Anmeldung: 16.11.2011
(73) Patentinhaber: Dr. Franke + Dr. Hitzler Entwicklungen UG (haftungsbeschränkt) & Co. KG, 38112 Braunschweig (DE)
(72) Erfinder: Franke, Stefanie, 38154 Königslutter (DE); Hitzler, Wilfried, 89551 Königsbronn (DE)

(56) Entgegenhaltungen:
- EP-A2- 0 302 200
- WO-A1-91/01234
- WO-A1-97/17238
- WO-A1-03/097420
- WO-A1-2010/019037
- CN-Y- 201 157 323
- DE-A1-102010 038 858
- DE-U1- 20 113 048
- DE-U1- 20 203 181
- GB-A- 162 316
- GB-A- 1 309 742
- US-A- 1 137 546
- US-A- 1 857 419
- US-A- 2 648 866
- US-A- 5 479 077

## Beschreibung

Die Erfindung betrifft eine Vorrichtung zum Reinigen von zumindest annähernd ebenen Flächen, insbesondere Fensterflächen eines Hochhauses, nach dem Oberbegriff des Patentanspruches 1.

Schwer zugängliche Flächen, insbesondere Fensterflächen von Hochhäusern, bedingen einen nicht unerheblichen technischen und personellen Aufwand für deren Reinigung. Es sind manuell betätigbare Vorrichtungen zur Reinigung von solchen Flächen bekannt, die ein Element zum Auftrag von Reinigungsmittel auf die zu reinigenden Flächen und ein Abstreifmittel für Schmutz und für Reinigungsmittel vorsehen. Häufig sind solche Reinigungsmittel an teleskopierbaren Stielen angeordnet, sodass eine gewisse Distanz zwischen der zu reinigenden Fläche und der Bedienperson überbrückt werden kann.

Die DE 195 05 343 A1 zeigt und beschreibt ein Hartflächen-Reinigungsgerät, insbesondere einen Fensterwischer mit einem Saugkopf, an dem eine flexible Abstreiflippe gehalten ist, neben der sich eine Absaugöffnung befindet. An dem Saugkopf ist eine Öffnung zum Aufbringen von Reinigungsflüssigkeit vorgesehen, sodass ein kontinuierlicher Auftrag von Reinigungsflüssigkeit und Abtrag von gelöstem Schmutz und Reinigungsflüssigkeit von einem Fenster ermöglicht ist.

Es sind insbesondere zur Reinigung von Hochhausfenstern aufwändige Krananlagen mit an einer Hochhausfront absenkbaren Arbeitsbühnen bekannt. Mit Hilfe dieser, über die Höhe eines Hochhauses verfahrbaren Arbeitsbühnen lässt sich mit Reinigungspersonal eine entsprechend kostenintensive ein- oder mehrmalige Reinigung pro Jahr von ansonsten unzugänglichen Fensterflächen bewirken.

Um solche zum Inventar eines Hauses gehörigen Anlagen zu überkommen, ist bekannt, Elemente zum Abtrag von Schmutz von Fensterflächen oder sonstigen annähernd ebenen Flächen, die im Übrigen unzugänglich sind, zu verwenden, die parallelverschiebbar sind. Eine derartige Fensterputzvorrichtung beschreibt beispielsweise die DE 195 43 595 A1. Dabei wird ein Wischersteg, parallel über ein Zugmittel angetrieben, über eine Fensterfläche geführt.

Die DE 201 13 048 U1 beschreibt eine Vorrichtung zur Reinigung glatter Flächen, wie Fensterscheiben mit einem Element in der Art eines Scheibenwischers zum Abtrag von Schmutz von der zu reinigenden Fläche, wobei der Scheibenwischer translatorisch durch eine Parallelverschiebung dessen, mit Hilfe von jeweils an seinen Enden angreifenden Spindeln verschoben wird.

Die US 5 479 077 A beschreibt einen Scheibenwischer für eine Infrarotkamera mit einem Wischerarm, der von einem Elektromotor rotatorisch angetrieben ist, wobei die Drehrichtung des Elektromotors über Signale zweier Hall-Sensoren gesteuert ist. Der Wischerarm weist zwei parallel verlaufende Reinigungslippen auf.

Die CN 201 157 323 Y beschreibt einen humanoid ausgeführten Roboterarm zum Reinigen von Fensterflächen, bestehend aus einem großen Arm, der über einen Verbindungsschaft einen kleineren Arm mit einem Reinigungswerkzeug antreibt. Mehrere Aktuatoren an dem Roboterarm ermöglichen eine rotatorische und translatorische Bewegung des Reinigungswerkzeugs über die Fensterflächen.

Die US 2 648 866 A beschreibt eine an Fensterrahmen eines Hauses formschlüssig lösbar anklipsbare Vorrichtung zur Reinigung von Glasflächen eines entsprechenden Fensters. Die Vorrichtung besteht im Wesentlichen aus zwei zueinander beabstandeten, an je einen Fensterrahmen des Fensters anbringbaren Führungsstangen. An den Führungsstangen bewegen sich Reibrollen, die von einem gemeinsamen Elektromotor über flexible Wellen und ein jeweiliges Kegelradgetriebe angetrieben sind. Dadurch werden Reinigungswerkzeuge mit Gummilippen translatorisch über die zu reinigenden Flächen geführt. Der Reinigungsvorgang wird durch ständige Aufgabe von Wasser auf die Fensterflächen unterstützt. Der Arbeitsbereich der Gummilippen muss an die Größe der Fensterflächen angepasst werden, sodass insgesamt die US 2 648 866 A eine komplex im Aufbau und in der Anwendung zu handhabende Vorrichtung offenbart.

Die WO 2010/019037 A1 beschreibt eine Vorrichtung zur Reinigung von Fensterflächen, mit einem Reinigungswerkzeug, das translatorisch über die zu reinigende Fensterfläche bewegt wird und dessen axiale Erstreckung der Breite der zu reinigenden Fensterfläche entspricht. Das Reinigungswerkzeug ist um seine Längsachse in der Art einer rotierenden Bürste drehbar. Ferner weist die Vorrichtung eine Einrichtung zur Aufbringung von Reinigungsflüssigkeit auf.

Die WO 97/17238 A1 beschreibt einen Scheibenwischer und ein Verfahren zum Betrieb eines Scheibenwischers, wobei der Scheibenwischer ein, einen Schwenkantrieb ausweisenden Wischerarm aufweist, der einen ersten um eine fahrzeugfeste Längsachse schwenkbar gelagerten Wischerarm und einen im ersten Wischerarmteil längsverschiebbar geführten zweiten Wischerarmteil aufweist, an dessen freiem Ende ein Wischerblatt angeordnet ist. Ein erster Motor ist für den Schwenkantrieb vorgesehen und ein zweiter Motor ist für den Verschiebeantrieb vorgesehen.

Die WO 91/01234 A1 beschreibt einen Schmutzsensor für Kraftfahrzeugscheiben zur Erfassung von Fremdkörpern, mit einer dynamisch angesteuerten Reflexionslichtschranke, deren Empfänger über einen Arbeitswiderstand von einer Versorgungsspannung gespeist wird. Der Arbeitspunkt des Empfängers ist in Abhängigkeit vom einfallenden Fremdlicht regelbar, sodass durch einen Pegelvergleich ein durch Regentropfen verursachtes Signal abgetrennt wird. Bei einem schwachen Signal wird eine Sprüheinrichtung zur Reinigung von als verschmutzt erkannten Flächen aktiviert.

In jüngster Zeit werden autonome mobile Vehikel zur Reinigung von insbesondere Hochhausglasfronten eingesetzt. Solche autonome mobile Vehikel weisen saugnapfbestückte Fortbewegungswerkzeuge auf und sind in der Lage, über eine Distanz von etwa 200 Metern derartige Glasfronten vertikal zu durchschreiten. Dabei sind an den autonomen mobilen Vehikeln Reinigungswerkzeuge wie etwa eine Bürstenwalze, die mit Reinigungsmitteln beaufschlagt wird, angeordnet. Mit Hilfe von Kabeln und Schlauchleitungen für die Zufuhr von Reinigungsmitteln sind derartige autonome mobile Vehikel mit einer Bodenstation gekoppelt. Grundsätzlich stellt der Einsatz derartiger Vorrichtungen eine äußerst kostenintensive und die Arbeitssicherheit nicht immer gewährleistende Art der Reinigung von annähernd ebenen schwer zugänglichen Flächen dar.

Die bekannten Vorrichtungen zum Reinigen von insbesondere unzugänglichen Fensterflächen von Hochhäusern bauen zum Einen sehr aufwändig und sind zum Anderen störanfällig in ihrem Betrieb, sodass sie insgesamt keinen kostengünstigen und störungsfreien Betrieb über viele Jahre oder gar Jahrzehnte ermöglichen.

Ausgehend von diesem Stand der Technik liegt der Erfindung die Aufgabe zugrunde, eine Vorrichtung zum Reinigen von zumindest annähernd ebenen Flächen anzugeben, die kostengünstig und betriebssicher ist und auch zum Nachrüsten von schwer zugänglichen zu reinigenden Flächen geeignet ist.

Die Aufgabe wird mit einer Vorrichtung mit den Merkmalen des Patentanspruches 1 gelöst.

Dadurch, dass das Gehäuse einen Befestigungsflansch aufweist, der axial in eine Öffnung der Fläche oder eines Rahmens der Fläche greift, ist eine konstruktiv einfache Maßnahme angegeben, derartige schwer zugängliche Flächen kostengünstig mit einer Vorrichtung mit hoher Verfügbarkeit zu reinigen. Die Vorrichtung ist an einer ersten Seite (Außenseite) der zu reinigenden Fläche lösbar festgelegt und kann von der, der ersten Seite gegenüberliegenden Seite (Innenseite) gelöst werden. Das Lösen und Entfernen der Vorrichtung zum Zwecke der Wartung der Vorrichtung kann durch die Öffnung in der zu reinigenden Fläche erfolgen. Der Befestigungsflansch greift axial in eine Öffnung der Fläche des Rahmens. Die Öffnung stellt eine Durchführöffnung für das Element zum Abtrag von Schmutz dar. Auf diese Weise ist es ermöglicht, dass bei einer nachträglichen Montage der Vorrichtung an Fenstern des Hochhauses die genannten Bauteile durch die Öffnung geführt und anschließend der Befestigungsflansch an dem Rahmen lösbar festgelegt werden kann. Zum Zwecke der Reparatur oder des Austauschs der Vorrichtung kann der Wischerarm von der ersten Seite zur zweiten Seite gefahrlos bewegt werden.

Vorzugsweise werden hier (man denke an Getriebemotoren) bekannte und erprobte Bauelemente des Fahrzeug- und Maschinenbaus angewandt. Die erfindungsgemäße Vorrichtung ist somit kostengünstig in großen Stückzahlen darstellbar, ähnlich wie in großen Mengen hergestellte Zulieferkomponenten von Scheibenwischern von Kraftfahrzeugen.

Bevorzugte Ausführungsbeispiele ergeben sich aus den Unteransprüchen.

Das Lösen der Vorrichtung kann hierbei von der, der ersten Seite gegenüberliegenden Seite (Innenseite) erfolgen und die Entfernung der Vorrichtung zum Zwecke der Wartung der Vorrichtung durch die Öffnung in der zu reinigenden Fläche erfolgen.

Der Sockel stellt eine Antriebsseite für den Wischerarm dar und ist drehfest mit einem Triebkopfgehäuse über eine Welle verbunden. Das Triebkopfgehäuse umfasst zu diesem Zweck mit seitlichen Wangen den Sockel. An dem Triebkopfgehäuse ist ein Abschnitt des Elements zum Abtrag von Schmutz bzw. des Wischerarmes festgelegt.

Um eine zu der rotatorischen Bewegung des Wischerarmes vorgesehene translatorische Bewegung des Wischerarmes zu ermöglichen und damit nahezu vollständig auch die übliche eckige oder rechteckförmige Form von Fenstern bestreichen zu können, ist es zweckmäßig, einen teleskopierbaren Abschnitt des Wischerarmes von einem zweiten Servomotor längsverschiebbar mittels einer Bewegungsschraube anzutreiben. Der teleskopierbare Abschnitt verschiebt sich dabei axial relativ zu einem von dem ersten Servomotor angetriebenen Abschnitt des Wischerarmes.

An einer einzigen zu reinigenden Fläche oder deren Rahmen können auch zwei oder mehrere erfindungsgemäße Vorrichtungen angeordnet sein. Hierbei bestreichen die jeweiligen Wischerarme der Vorrichtungen jeweils Teilflächen der zu reinigenden Fläche. Die von den Wischerarmen überstrichenen Teilflächen überlappen sich vorzugsweise derart, dass eine insgesamt rückstands- oder streifenfreie Reinigung der gesamten Fläche ermöglicht ist.

Hierbei können die Vorrichtungen in Ecken der zu reinigenden Fläche oder axial mittig, sich horizontal gegenüberliegend angeordnet sein. Dadurch lassen sich mit der erfindungsgemäßen Vorrichtung auch sehr große Flächen reinigen.

Die Erfindung ist nachfolgend anhand eines Ausführungsbeispiels beschrieben und anhand der Zeichnung gezeigt. In der Zeichnung zeigen:
Fig. 1 einen schematischen, teilweisen nicht maßstäblichen Längsschnitt und Seitenansicht einer erfindungsgemäßen Vorrichtung,
Fig. 2 die Vorrichtung in Figur 1 an einem Fenster eines Hochhauses angeordnet.

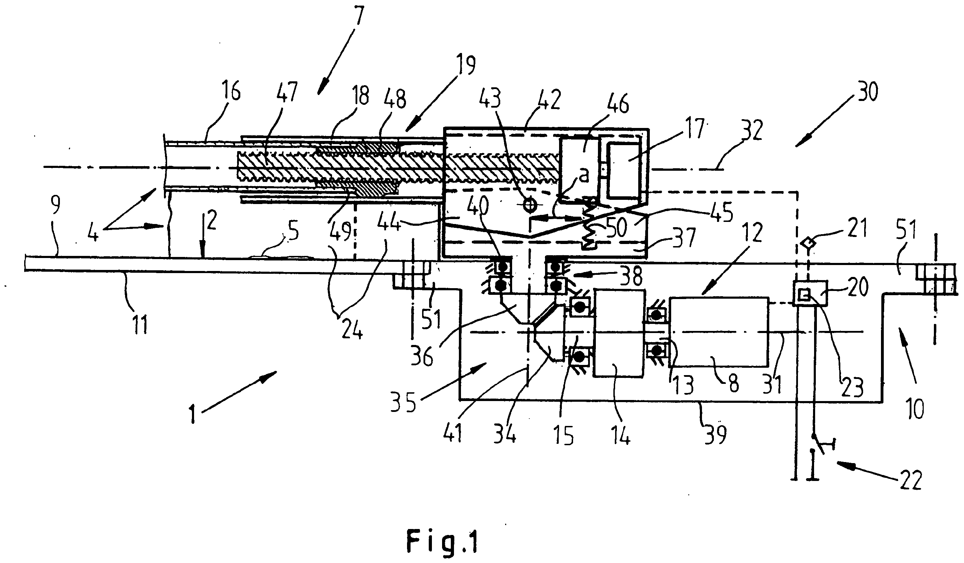

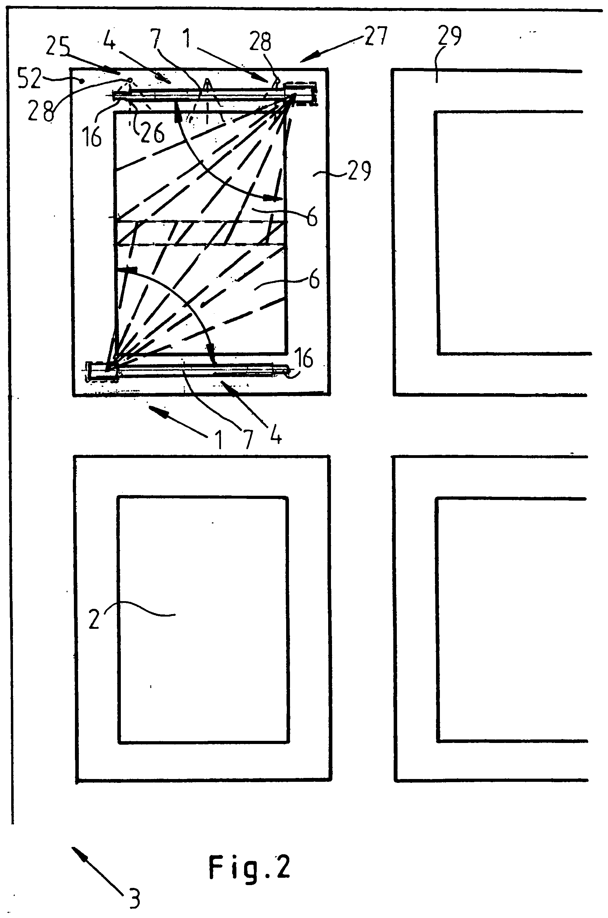

In Fig. 1 ist in einem teilweisen Längsschnitt eine Vorrichtung 1 zum Reinigen einer als Fensterfläche eines Hochhauses 3 (vgl. Fig. 2) gebildeten ebenen Fläche 2 gezeigt. Die Vorrichtung 1 kann sowohl bei der Neumontage von Fenstern, bei denen die Reinigung der Außenseite manuell nicht möglich ist, als auch zur Nachrüstung bereits bestehender Fenster angewandt werden. Die Vorrichtung besteht im Wesentlichen aus einer modulartig gebildeten Antriebsseite 30 und einem als teleskopierbaren und rotatorisch angetriebenen Wischerarm 7 gebildeten Element 4 zum Abtrag von Schmutz 5 von der Fläche 2 oder einer Teilfläche 6 der Fläche 2 oder des Fensters. Der Wischerarm 7 wird von einem ersten Servomotor 8, der als Elektromotor 12 - in dem gezeigten Ausführungsbeispiel als Synchronmaschine - gebildet ist, angetrieben.

Wie Figur 2 in einer Draufsicht auf eine Hausfront mit Fensterflächen der erfindungsgemäßen Vorrichtung 1 zeigt, beschreibt der Wischerarm 7 einen Teilkreis von 180 Grad.

Die Längsachse 31 des ersten Servomotors 8 ist etwa parallel zu der Längsachse 32 des Wischerarmes 7 ausgerichtet. Eine Welle 13 des ersten Servomotors 8 bildet ein Eingangsglied für ein Untersetzungsgetriebe 14, einem Wellgetriebe. Das Untersetzungsgetriebe 14 ist in der Lage, die Drehzahl des ersten Servomotors 8 stark zu untersetzen und ein sehr hohes Drehmoment auf den Wischerarm 7 aufzubringen. Ein Ausgangsglied 15 des Untersetzungsgetriebes 14 ist drehfest mit einem Kegelrad 34 eines Kegelradgetriebes 35 verbunden. Ein weiteres Kegelrad 36 des Kegelradgetriebes 35 ist drehfest mit einem Sockel 37 der Antriebsseite 30 für den Wischerarm 7 verbunden. Der Sockel 37 ist spielfrei in einer Wälzlageranordnung 38 radial und axial in einem Gehäuse 39 gelagert. Zwischen dem Sockel 37 und dem Gehäuse 39 ist in dem gezeigten Ausführungsbeispiel ein Axiallager 40 angeordnet.

Der Sockel 37 weist eine Rotationsachse 41 auf, die senkrecht zur Längsachse 31 des ersten Servomotors 8, der Welle 13 des Untersetzungsgetriebes 14 und des Kegelrades 34 ausgerichtet ist.

Drehfest mit dem Sockel 37, dessen Querschnitt im Wesentlichen U-förmig gebildet ist, ist ein Triebkopfgehäuse 42 über eine Welle 43 verbunden. Das Triebkopfgehäuse 42 ist im Querschnitt im Wesentlichen ebenfalls U-förmig gebildet, wobei seine seitlichen Wangen 44 die Wangen 45 des Sockels 37 mit Axialspiel in Bezug auf die Welle 43 umfassen. Der Kantenverlauf der jeweiligen Wangen 44, 45 des Triebkopfgehäuses 42 und des Sockels 37 ist so, dass ein Kippen des Triebkopfgehäuses 42 relativ zu dem Sockel 37 um die Welle 43 in beide Richtungen möglich ist.

An dem Triebkopfgehäuse 42 ist ein Abschnitt 18 des Wischerarmes 7 festgelegt. Der Abschnitt 18 kann durch ein Profilrohr mit kreisförmigem oder von der Kreisform abweichender Querschnittsform gebildet sein. Das Profilrohr kann aus einem Metallwerkstoff oder einem Nichtmetallwerkstoff, wie etwa einem Faserverbund-Kunststoff gebildet sein. Ein teleskopierbarer Abschnitt 16 des Wischerarmes 7 ist in dem Abschnitt 18 gleitend mit geringstem Radialspiel geführt. Während des Reinigungsvorganges findet, wie Figur 2 verdeutlicht, eine rotatorische Bewegung des Wischerarmes 7, die von einer translatorischen Teleskopierbewegung des Abschnitts 16 überlagert ist, statt. So lassen sich mit einem Reinigungswerkzeug 24 an beiden Abschnitten 16, 18 beispielsweise, wie in Figur 2 gezeigt, rechteckige Teilflächen 6 der zu reinigenden Fläche, insbesondere des Hochhausfensters überstreichen.

Der erste Servomotor 8 kann in einem nicht gezeigten Ausführungsbeispiel sowohl die translatorische als auch die rotatorische Bewegung des Wischerarms durchführen, indem ein Nebenantrieb des ersten Servomotors für die translatorische Bewegung genutzt wird.

Zur Darstellung der Teleskopierbewegung des Abschnitts 16 dient ein zweiter Servomotor 17. Der zweite Servomotor 17 ist ebenso als Elektromotor, als Synchronmaschine im in Figur 1 dargestellten Ausführungsbeispiel gebildet. Der zweite Servomotor 17 ist an einem axialen Ende des Triebkopfgehäuses 42 so angeordnet, dass die Wangen 44 den Servomotor 17 im Wesentlichen umschließen. Die Drehzahl des Servomotors 17 wird von einem weiteren Untersetzungsgetriebe 46 - beispielsweise einem Planetenradgetriebe - stark untersetzt. Ein Ausgangsglied des Untersetzungsgetriebes 46 ist von einer Spindel 47 gebildet. Die Spindel 47 durchragt axial den Abschnitt 18 des Wischerarmes 7. Ferner durchragt die Spindel 47 eine Mutter 48, die drehfest und axial unverschiebbar an einem axialen Ende 49 des teleskopierbaren Abschnitts 16 festgelegt ist. Der teleskopierbare Abschnitt 16 ist gegenüber dem Abschnitt 18 verdrehgesichert. Somit ist eine Bewegungsschraube 19 zur Darstellung eines Linearantriebes gebildet.

Der zweite Servomotor 17, das Untersetzungsgetriebe 46 und die Spindel 47 sind durch das Triebkopfgehäuse 42 und den starren Abschnitt 18 des Wischerarmes 7 vor Witterungseinflüssen geschützt. Das Reinigungswerkzeug 24 ist zur Ermöglichung der Teleskopierfunktion des Wischerarmes 7 axial geteilt in dem Sinne, dass eine Teillänge des Reinigungswerkzeuges 24 lösbar und austauschbar an dem teleskopierbaren Abschnitt 16 und eine Teillänge des Reinigungswerkzeuges 24 lösbar und austauschbar an dem Abschnitt 18 festgelegt sind. Im eingefahrenen Zustand des Abschnitts 16 überlagern sich die Teillängen des Reinigungswerkzeuges 24 axial.

Zur radialen Anpressung des Reinigungswerkzeuges 24 auf die zu reinigende Fläche 2 ist eine oder mehrere Schraubendruckfedern 50 vorgesehen. Die Schraubendruckfeder 50 ist in dem gezeigten Ausführungsbeispiel als zylindrische Schraubendruckfeder gebildet und die Schraubendruckfeder 50 stützt sich zwischen einer Aufnahme an dem Triebkopfgehäuse 42 und einer Aufnahme an dem Sockel 37 mit radialem Abstand a zu der Welle 43 ab. Somit ist der Wischerarm 7 nebst Triebkopfgehäuse 42 radial an die Fläche 2 gepresst. Dadurch ist gewährleistet, dass ein einwandfreier Schmutzabtrag von der Fläche 2 erfolgen kann.

In einem besonders einfachen Ausführungsbeispiel wird der Reinigungsvorgang für die Fläche 2 durch manuelle Betätigung einer Schalteinrichtung 22 zur Spannungsversorgung einer Steuer- und/oder Regelungseinrichtung 20 und der Servomotoren 8 und 17 bewirkt. Beispielsweise kann eine Reinigungskraft, die ohnehin eine Raumreinigung durchführt, durch Betätigung der Schalteinrichtung 22 eine Außenreinigung der Fenster des Hochhauses 3 initiieren. Der Reinigungsvorgang kann auch automatisch durch Auslösen des Betriebs des Servomotoren 8, 17 durch Messwerte eines Sensors 21 zur Messung des Verschmutzungsgrades der Fläche 2 initiiert werden. Dabei können die Drehzahlen der Servomotoren 8, 17 durch Steuerprogramme, die in einem Speicher 23 abgelegt sind, vorgegeben werden. Dadurch ist beispielsweise eine Adaptation der gesamten Vorrichtung 1 an die jeweilige Größe der zu überstreichenden Flächen 2 (erforderliches Drehmoment für den Wischerarm 7) ermöglicht.

Das Gehäuse 39 weist einen Befestigungsflansch auf, der axial in eine Öffnung 10 der Fläche 2, oder wie in Figur 2 gezeigt, eines Rahmens 29 greift. Die Öffnung 10 stellt eine Durchführöffnung für den Wischerarm 7 nebst Triebkopfgehäuse 42 und Sockel 37 dar. Auf diese Weise ist es ermöglicht, dass bei einer nachträglichen Montage der Vorrichtung 1 an Fenstern des Hochhauses 3 die genannten Bauteile durch die Öffnung 10 geführt und anschließend der Befestigungsflansch 51 an dem Rahmen 29 lösbar festgelegt wird. Zum Zwecke der Reparatur oder des Austausches der Vorrichtung 1 kann der Wischerarm 7 zusammen mit dem Triebkopfgehäuse 42 von einer ersten, zu reinigenden Seite 9 (Fensteraußenseite) zu einer der Seite 9 gegenüberliegenden Seite 11 (Fensterinnenseite) gefahrlos bewegt werden.

Beim Betrieb der Vorrichtung 1 kann entweder ein natürlicher Feuchtebelag (Tau, Regen) auf der Seite 9 ausgenutzt werden, um die Fläche 2 zu reinigen. Es kann auch ein Auftrag von Reinigungsmittel 26 durch eine Einrichtung 25 zum Auftrag des Reinigungsmittels 26 bewirkt werden. Die Einrichtung 25 kann eine Spritz- oder Sprüheinrichtung 27 zum linien- oder flächenhaftem Auftrag von Reinigungsmittel 26 auf die Fläche 2 sein. In Figur 2 ist beispielhaft eine Düsenöffnung 28 am Rahmen 29 dargestellt. Die Reinigungsflüssigkeit kann beispielsweise durch Reinigungspersonal vom Inneren des Hochhauses über eine Fluidkupplung 52 an dem Rahmen 29 eingebracht werden. Hierzu ist beispielsweise eine manuell unter Druck bringbare, Reinigungsmittel 26 enthaltende Spritzflasche denkbar. Nach Auftrag und Verteilung des Reinigungsmittels 26 auf der Fläche 2 kann von dem Reinigungspersonal manuell durch Betätigung der Schalteinrichtung 22 die Vorrichtung 1 in Betrieb gesetzt werden. Dabei gewährleistet die Steuer- und/oder Regelungseinrichtung 20 jeweils eine exakte Abschaltung der Servomotoren 8, 17 in einer definierten Endposition des Wischerarmes 7. Der Wischerarm 7 verbleibt somit in einer Außerbetriebsstellung der Vorrichtung 1 am Rand oder außerhalb der zu reinigenden Fläche 2.

Wie Figur 2 zeigt, können in Abhängigkeit der Größe von der Fläche 2 zwei oder mehrere Vorrichtungen 1 je Fläche 2 vorgesehen sein. Die von dem jeweiligen Wischerarm 7 dabei überstrichenen Teilflächen 6 überlappen sich zur Gewährleistung einer insgesamt streifenfreien Reinigungsarbeit der Vorrichtung 1.

Es versteht sich, dass die jeweilige obere Vorrichtung 1 im Betrieb zeitlich der unteren Vorrichtung 1 priorisiert ist. Die Vorrichtungen können anstatt wie in dem Ausführungsbeispiel in Figur 2 gezeigt, axial mittig, auch in Ecken der Flächen 2 angeordnet sein oder sich horizontal gegenüberliegend angeordnet sein.

## Patentansprüche

1. Vorrichtung zum Reinigen von zumindest annähernd ebenen Flächen (2), insbesondere Fensterflächen eines Hochhauses (3) mit einem Servomotor (8), der ein Element (4) zum Abtrag von Schmutz (5) von der Fläche (2), welches zumindest über eine Teilfläche (6) der Fläche (2) geführt ist antreibt, wobei das Element (4) in der Art eines Wischerarmes (7) gebildet ist und eine translatorische und/oder rotatorische Bewegung über die Fläche (2) ausführen kann, wobei der Servomotor (8) in einem Gehäuse (39) angeordnet ist und eine Ausgangswelle (13) des Servomotors (8) ein Eingangsglied eines Untersetzungsgetriebes ist, dessen Ausgangsglied wiederum mit dem Element (4) der Vorrichtung verbunden ist, und wobei ein Sockel (37) der Antriebsseite (30) für den Wischerarm (7) des Elements (4) spielfrei in einer Wälzlageranordnung (38) radial und axial in dem Gehäuse (39) gelagert ist, **dadurch gekennzeichnet, dass** das Gehäuse (39) einen Befestigungsflansch (51) aufweist, der ausgebildet ist, axial in eine Öffnung (10) der Fläche (2) oder eines Rahmens (29) der Fläche (2) einzugreifen.

2. Vorrichtung nach Anspruch 1, **dadurch gekennzeichnet, dass** die Vorrichtung (1) an einer ersten Seite (9) der Fläche (2) lösbar festlegbar ist, wobei nach Lösen der Vorrichtung (1) diese durch die Öffnung (10) in der Fläche (2) auf eine der ersten Seite (9) gegenüberliegenden Seite (11) bewegbar ist.

3. Vorrichtung nach Anspruch 2, **dadurch gekennzeichnet, dass** die Vorrichtung (1) an der ersten Seite (9) der Fläche (2) festlegbar ist und von der der ersten Seite (9) gegenüberliegenden Seite (11) lösbar ist.

4. Vorrichtung nach einem der Ansprüche 1 bis 3, **dadurch gekennzeichnet, dass** der Sockel (37) und ein Triebkopfgehäuse (42) drehfest über eine Welle (43) verbunden sind.

5. Vorrichtung nach einem der Ansprüche 1 bis 4, **dadurch gekennzeichnet, dass** an dem Triebkopfgehäuse (42) ein Abschnitt (18) des Wischerarmes (7) festgelegt ist.

6. Vorrichtung nach Anspruch 5, **dadurch gekennzeichnet, dass** ein teleskopierbarer Abschnitt (16) des Elements (4) in dem Abschnitt (18) gleitend geführt ist.

## Claims

1. A device for cleaning of at least approximately planar surfaces (2), in particular window surfaces of a high-rise building (3), with a servo motor (8) driving an element (4) for removal of dirt (5) from the surface (2), which is guided at least across a partial surface (6) of the surface (2), wherein the element (4) is formed in the fashion of a wiper arm (7) and may perform a translational and/or rotational movement across the surface (2), the servo motor (8) being arranged in a housing (39), and an output shaft (13) of the servo motor (8) being an input member of a reduction gear, whose output member, in turn, is connected to the element (4) of the device, and a base (37) of the drive side (30) for the wiper arm (7) of the element (4) being supported without play in a rolling bearing assembly (38) radially and axially in the housing (39), **characterized in that** the housing (39) has a mounting flange (51) designed for axially engaging an opening (10) of the surface (2) or a frame (29) of the surface (2).

2. The device according to claim 1, **characterized in that** the device (1) is releasably fixable on a first side (9) of the surface (2), wherein, after detaching the device (1), said is movable to a side (11) opposite to the first side (9) through the opening (10) in the surface (2).

3. The device according to claim 2, **characterized in that** the device (1) is fixable on the first side (9) of the surface (2), and is detachable from the side (11) opposite to the first side (9).

4. The device according to any one of claims 1 to 3, **characterized in that** the base (37) and a driving unit housing (42) are non-rotatably connected via a shaft (43).

5. The device according to any one of claims 1 to 4, **characterized in that** a section (18) of the wiper arm (7) is fixed to the driving unit housing (42).

6. The device according to claim 5, **characterized in that** a telescopic section (16) of the element (4) is slidably guided in the section (18).

## Revendications

1. Dispositif pour nettoyer au moins approximativement les surfaces planes (2), en particulier les surfaces de fenêtre d'un immeuble de grande hauteur (3), avec un servomoteur (8), qui entraîne un élément (4) pour enlever la saleté (5) de la surface (2), qui est guidé au moins sur une surface partielle (6) de la surface (2), l'élément (4) étant formé à la manière d'un bras d'essuie-glace (7) et pouvant effectuer un mouvement de translation et/ou de rotation sur la surface (2), le servomoteur (8) étant placé dans un boîtier (39) et un arbre de sortie (13) du servomoteur (8) étant un élément d'entrée d'un réducteur de vitesse, dont l'élément de sortie est relié à son tour à l'élément (4) du dispositif, et une base (37) du côté entraînement (30) pour le bras d'essuie-glace (7) de l'élément (4) étant logée sans jeu dans un montage de palier à roulement (38) de manière radiale et axiale dans le boîtier (39), ***caractérisé en ce que*** le boîtier (39) comprend une bride de fixation (51), qui est configurée de façon à s'engager axialement dans une ouverture (10) de la surface (2) ou d'un cadre (29) de la surface (2).

2. Dispositif selon la revendication 1, **caractérisé en ce que** le dispositif (1) peut être fixé de manière amovible sur un premier côté (9) de la surface (2), après libération du dispositif (1) celui-ci pouvant être déplacé par l'ouverture (10) de la surface (2) sur un côté (11) opposé au premier côté (9).

3. Dispositif selon la revendication 2, **caractérisé en ce que** le dispositif (1) peut être fixé sur le premier côté (9) de la surface (2) et peut être détaché du côté (11) opposé au premier côté (9).

4. Dispositif selon l'une des revendications 1 à 3, **caractérisé en ce que** la base (37) et un boîtier d'élément moteur (42) sont reliés de manière résistante à la torsion par un arbre (43).

5. Dispositif selon l'une des revendications 1 à 4, **caractérisé en ce qu'**une section (18) du bras d'essuie-glace (7) est fixée au boîtier d'élément moteur (42).

6. Dispositif selon la revendication 5, **caractérisé en ce qu'**une section télescopique (16) de l'élément (4) est guidée de manière coulissante dans la section (18).
